# EUROPEAN PATENT APPLICATION

(11) **EP 1 959 579 A1**
(43) Date of publication of application: **20.08.2008**
(21) Application number: 05806121.9
(22) Date of filing: 11.11.2005
(51) Int. Cl.: H04B 1/59, G08C 17/00, H04B 5/02, G06K 17/00, G06K 19/00

(54) **ELECTRONIC TAG, AND ELECTRONIC TAG SYSTEM**

(71) Applicant: FUJITSU LIMITED, Kawasaki-shi, Kanagawa 211-8588 (JP)
(72) Inventor: MASUI, Shoichi, Kawasaki-shi, Kanagawa 211-8588 (JP); MUKAIDA, Kenji, Kawasaki-shi, Kanagawa 211-8588 (JP)
(74) Representative: Holtby, Christopher Lawrence
(86) International application number: PCT/JP2005/020726
(87) International publication number: WO 2007/055015

(57) **Abstract**

An electronic tag comprises a unit for storing transmission-use data and a unit for both comparing between the stored data and comparison data sent from an R/W and for determining whether or not the identifier of the tag per se is to be transmitted to the R/W in order to participate in an anti-collision process carried out between the electronic tag and the R/W as a necessary process prior to transmitting data to the R/W for the purpose of speeding up the recognition of electronic tags retaining data satisfying a condition by making the electronic tags retaining data satisfying the condition, from among a large number of electronic tags, participate in the anti-collision process.

## Description

### Technical Field

The present invention relates to an electronic tag and an electronic tag system constituted by an electronic tag and by a reader/writer, and specifically to an RFID tag system comprising devices such as a radio frequency identification (RFID) tag adopting a data transmission/reception via radio, and a reader/writer that transmits and receives data to and from the RFID tag.

### Background Art

Electronic tags have been widely used in recent years for product management and the like, by being attached to, for example, a commercial product. Among the commercialized products, there exists a specific RFID tag having a sensor capable of detecting, for example, the temperature, humidity, acceleration, electric resistance, and such, of the environment where the tag is equipped, so that the RFID tag system is capable of performing a process in response to the environment on the basis of the information obtained from such a sensor.

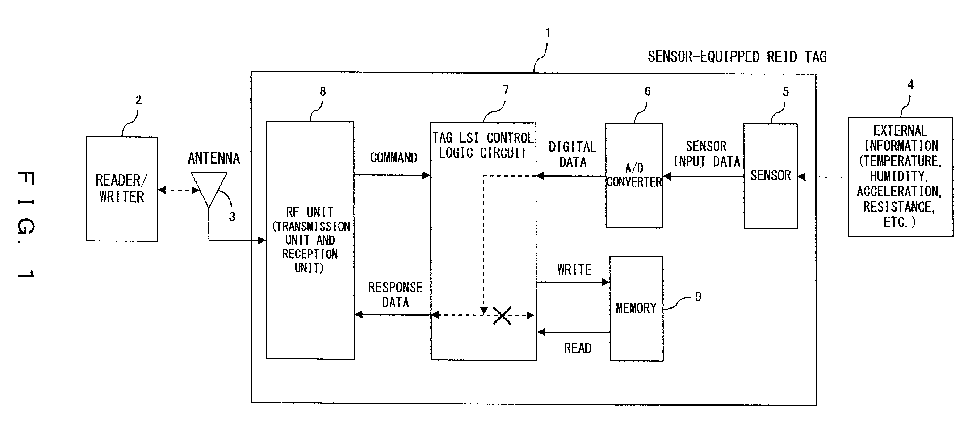

Fig. 1 shows the configuration of a conventional example of such an RFID tag. Referring to Fig. 1, a sensor-equipped RFID tag 1 is capable of transmitting and receiving data to and from a reader/writer (noted as "R/W" hereinafter) 2, which transmits and receives an RF signal, by using an antenna 3, and of receiving the input of external information 4 such as temperature, humidity, acceleration, and resistance.

The sensor-equipped RFID tag 1 comprises a sensor 5 for receiving the external information 4, an analog/digital (A/D) converter 6 for converting sensor input data into digital data, a tag LSI control logic circuit 7 for outputting the sensor input data converted to the digital data as response data to the R/W 2 in response to a command from the R/W 2, an RF unit 8 for transmitting and receiving data to and from the R/W 2, and memory 9. Here, the RF unit 8, being constituted by a transmission unit and a reception unit, comprises a rectification circuit for rectifying the alternating current (AC) power given from the outside if the tag is a passive tag receiving a provision of an operating power from the outside. Meanwhile, the configuration is such that the memory 9 in this comprisal is not capable of reading or writing response data from or to the R/W 2 for which the sensor input data is digitized.

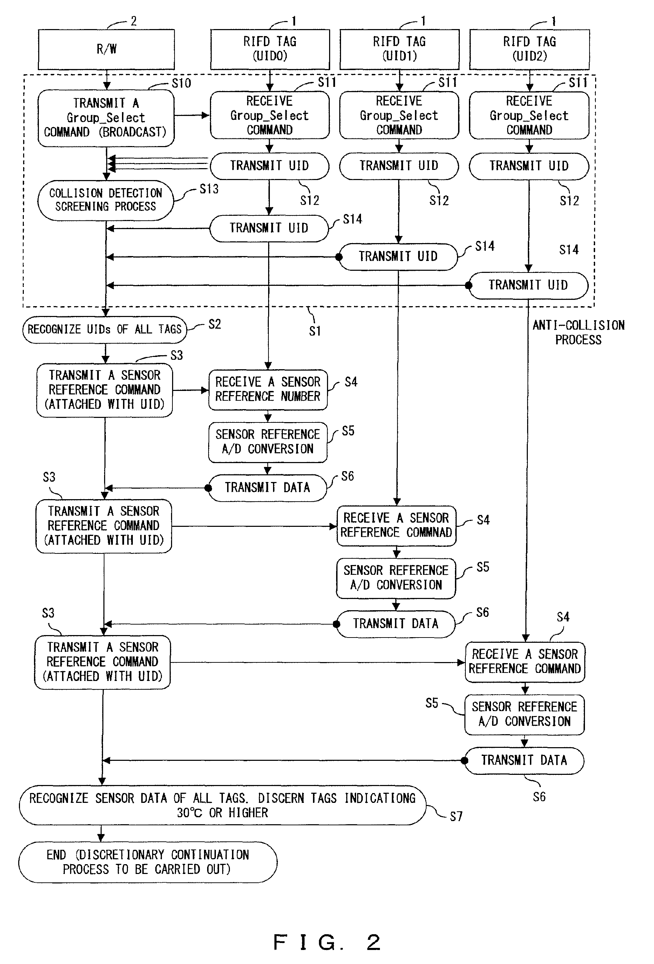

Fig. 2 is the conventional example of a sensor data-obtainment process using a sensor-equipped RFID tag. In the configuration of Fig. 2, the assumption is that the data transmission and the reception is between the R/W 2 and the plurality of RFID tags and that the individual RFID tags have UID0, UID1, UID2, and so on, as the respective unique identifiers UID (meaning "unique identity"). Therefore, the designation of an identifier UID in a command to be transmitted to an individual RFID tag enables the R/W 2 to read and write from and to the individual RFID tag.

Referring to Fig. 2, first, an anti-collision process is carried out in step S1. If a plurality of RFID tags 1 respond simultaneously to a transmitted command from one R/W 2, the signals collide with one another in the reception circuit within the R/W 2, disabling a normal response, and therefore the R/W 2 screens the RFID tags to which a response is to be sent and eventually culls them to one tag by carrying out an anti-collision process and repeats the process for obtaining a UID. The anti-collision process is described later.

In Fig. 2, when all UIDs of the RFID tags that have responded back are obtained through the anti-collision process in step S2, a sensor data reference process for each RFID tag 1 that has transmitted their respective UIDs is carried out in steps S3 through S6. That is, the R/W 2 transmits a sensor reference command in step S3 in order to receive the sensor data from one RFID tag 1. Over at the RFID tags 1, the tag having the value of the UID then receives the sensor reference command in step S4, the sensor is referred to and an A/D conversion of the data is carried out in step S5, and then the process for transmitting data over to the R/W 2 is performed repeatedly for each of the RFID tags 1 in step S6.

Then the R/W 2 recognizes tags which have sent the data indicating 30°C and higher from among the pieces of data sent from all tags, and it sends, for example, the sensor data, temperature data, e.g., from a plurality of RFID tags 1 to a host system as a discretionary continuation process, which results in the host system executing a process related to an environment in which the temperature sensor-equipped RFID tag 1 is installed, by way of a temperature control for an air conditioning machine in step S7.

Next is a description of the anti-collision process in detail. In the anti-collision process, although its algorithm is different depending on the standard, what is basically performed is the process for obtaining the respective UIDs of a plurality of RFID tags 1 which have responded back when the responses from the plurality thereof which have responded back as described above collide with one another.

Next is the description of the algorithm by exemplifying the ISO/IEC18000-6 described later. In this process, a group_select command is first transmitted from the R/W 2 as a broadcast (i.e., a broadcast type) command to all RFID tags 1 in step S10. The assumption here is that the group_select command is sent to all the RFID tags existing in the communication zone of the R/W 2 so that the RFID tags 1, having received the command in step S11, transmit the respective UIDs of the tags per se, as the responses, to the R/W 2, for simplicity of description.

In step S12, while the UIDs are transmitted from, for example, all the RFID tags 1 existing within the communication zone, there are generally plural pieces of such tags, and therefore the R/W 2 performs a screening process by detecting the collisions in step S13. In the screening process, what is repeated is that the plural RFID tags which have transmitted the respective UIDs as described above are screened and culled to eventually one RFID tag 1 and that the UID of the one RFID tag 1 is received.

According to the standard specified in the aforementioned ISO/18000-6, for example, the next broadcast command is first sent from the R/W 2 as a screening process. The RFID tags 1, which have transmitted the respective UIDs in step S12, each perform the process of generating, for example, a one-bit random number and transmitting the UID if the value of the random number is "0" while not transmitting the UID if it is "1". This process reduces the number of tags transmitting the UIDs, that is, sending responses.

If there are plural tags responding in this event, collisions occur again. The R/W 2 accordingly transmits a broadcast command again so that the RFID tags 1 that transmitted the UIDs previously each repeat the process of generating a one-bit random number and transmitting the UID if it is "0". This process enables the R/W 2 to obtain the UID of one RFID tag 1 as a result of only the aforementioned RFID tag 1, eventually transmitting the UID thereof. After obtaining the UID of one RFID tag 1, a repetition of the similar process from the beginning makes it possible to obtain the respective UIDs of the other RFID tags 1. Note that if the number of RFID tags 1 sending responses suddenly becomes "0" during the above described process, the process returns to the previous for repeating the above described process.

As such, the conventional example shown in Fig. 2 is configured such that the R/W within an electronic tag system carries out an anti-collision process, thereby obtaining the respective UIDs of all sensor-equipped RFID tags, followed by transmitting a sensor reference command (i.e., a unicast command) designating the UID for each tag to collect the respective pieces of sensor data detected by the individual sensor-equipped RFID tags; in this method, there has been the problem of the process taking a long period of time because the respective UIDs and pieces of sensor data of all sensor-equipped RFID tags need to be collected.

In the actual data collection, it is necessary to judge whether or not the temperature detected by the thermal sensor exceeds a predefined value in order to control, for example, an air conditioner. It is necessary to issue an alarm from a host system and/or to record the clock time in accordance with the result of judging whether or not there is a sensor-equipped RFID tag which has detected a temperature being, for example, no less than 30°C; and necessary to obtain the respective pieces of sensor data simultaneously for all sensor-equipped RFID tags. Even if it is possible to carry out the processes in, for example, 0.5 seconds, to obtain sensor data from one RFID tag and processing the result of obtaining the data, it takes 100 seconds to obtain, sensor data for 200 tags, thus one is faced with the problem of being unable to obtain data simultaneously.

In reference non-patent document 1, as one of the conventional techniques related to such an RFID tag, the anti-collision process is specified in detail as described above. Meanwhile, in reference non-patent document 2, the characteristics of a 13.56MHz, CMOS RFID tag having FRAM as ferroelectric memory are described in detail.
Non-patent document 1: ISO/IEC 18000-6: Information technology - Radio-frequency identification for item management - Part 6: Parameters for air interface communications at 860 MHz to 960 MHz
Non-patent document 2: S. Masui and T. Teramoto, "A 13.56MHz CMOS RF Identification Passive Tag LSI with Ferroelectric Random Access Memory," IEICE Trans. Electron., vol. E88-C, no, 4, pp. 601-607, 2005

The use of such a conventional technique has not been able to solve the problem of being unable to collect the sensor data rapidly from the sensor-equipped RFID tags which have detected, for example, a temperature exceeding no less than a predefined temperature.

### Disclosure of Invention

The purpose of the present invention is to make only electronic tag(s) that retain a condition-matching piece of data, from among a large number of electronic tags, participate in an anti-collision process, and thereby a data collection from the electronic tag(s) retaining the condition-matching piece of data is performed at a faster speed.

An electronic tag system according to the present invention fundamentally comprises a plurality of electronic tags and an R/W for reading and writing data to and from the electronic tags.

An electronic tag according to the present invention comprises a data storage unit for storing transmission-use data converted into digital data; and a tag identifier transmission-necessity judgment unit for comparing between comparison data transmitted from an R/W and data stored in the data storage unit and determining whether or not the identifier of the tag per se is to be transmitted to the R/W in order to participate in an anti-collision process carried out between the electronic tag and R/W as a necessary process prior to transmitting data to the R/W.

An R/W according to the present invention comprises a data-obtainment request transmission unit for sending a command requesting an electronic tag for obtaining data, and a comparison data transmission unit for sending comparison data to the electronic tag to be compared with data stored in the data storage unit at the electronic tag, wherein the data storage unit comprised in the electronic tag stores transmission-use data at the time of receiving the data-obtainment request command.

By means of the contrivance described above, the present invention enables the comparison between the transmission-use data stored at the electronic tag at the time of receiving a data-obtainment requirement command and the comparison data sent from the R/W thereafter and determines the number of electronic tags participating in the anti-collision process corresponding to the comparison result.

### Brief Description of Drawings

Fig. 1 is a block diagram of the configuration of a conventional example of a sensor-equipped RFID tag;
Fig. 2 is a conventional example of the process sequence for collecting sensor data from an RFID tag;
Fig. 3 is a block diagram of the basic comprisal of an electronic tag system according to the present invention;
Fig. 4 is a block diagram of the configuration of an RFID tag system according to the present invention;
Fig. 5 is a block diagram of the configuration of an RFID tag system according to first preferred embodiment;
Fig. 6 is the process sequence for collecting sensor data according to the first embodiment;
Fig. 7 exemplifies the format of a sensor reference command;
Fig. 8 is the process sequence for collecting sensor data at an RFID tag;
Fig. 9 is a block diagram of an electric resistance sensor-equipped RFID tag;
Fig. 10 is a diagram describing the comparison of characteristics between FRAM and EEPROM;
Fig. 11 is the process sequence for collecting sensor data from RFID tags according to a second preferred embodiment;
Fig. 12 is a block diagram of a sensor-equipped RFID tag according to a third preferred embodiment; and
Fig. 13 is the process sequence for collecting sensor data from RFID tags according to the third embodiment.

### Best Mode for Carrying Out the Invention

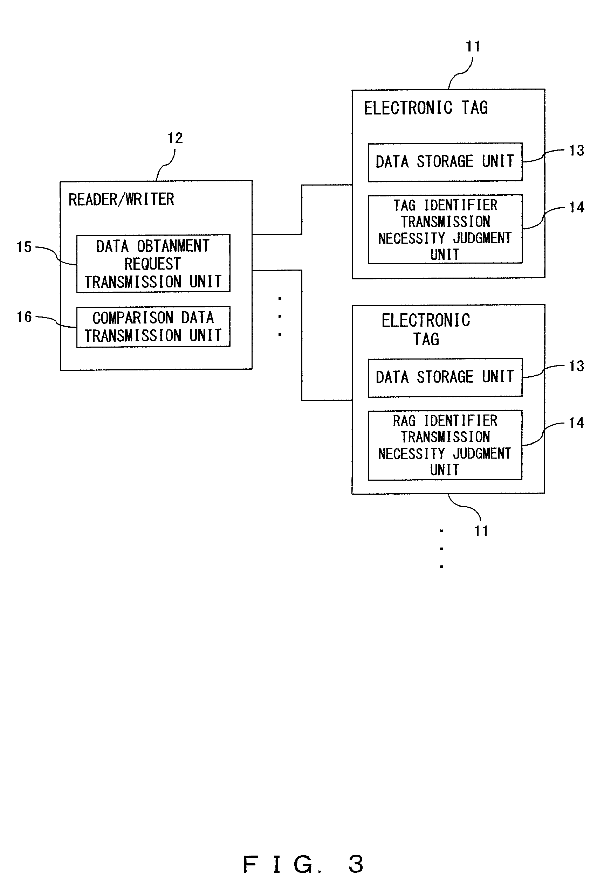

Fig. 3 is a block diagram of the basic comprisal of an electronic tag system according to the present invention. Fig. 3 is a block diagram of the basic comprisal of an electronic tag system corresponding to a third preferred embodiment of the present invention described later. An outline of the present invention is described first on the basis of Fig. 3.

Referring to Fig. 3, a plurality of electronic tags 11 are for transmitting and receiving commands and, for example, sensor data to and from an R/W 12 (sometimes paraphrased as "exchanging (for example, sensor data) with an R/W 12" for simplicity of description hereinafter), and each one comprises a data storage unit 13 and a tag identifier transmission-necessity judgment unit 14. The data storage unit 13 is for storing data converted into digital data and for transmitting to an R/W, such as sensor data, and is, for example, nonvolatile memory.

The tag identifier transmission-necessity judgment unit 14 is for comparing between comparison data transmitted from an R/W, e.g., a threshold value, and data stored in the data storage unit 13 and determining whether or not the identifier of the tag per se is to be transmitted to the R/W in order to participate in an anti-collision process carried out between the electronic tag and R/W as a necessary process prior to transmitting data to the R/W corresponding to the condition shown from the R/W.

Next, the R/W 12 comprises a data-obtainment request transmission unit 15 and a comparison data transmission unit 16. The data-obtainment request transmission unit 15 is for sending a command that requests transmission-use data from the that the electronic tag 11, and the comparison data transmission unit 16 is for sending the comparison data to an electronic tag 11 to be compared with the transmission-use data stored in the data storage unit 13 comprised by an electronic tag 11.

That is, a third preferred embodiment described later is configured to transmit a data-obtainment request, e.g., a sensor reference command, from the R/W 12, and to store, for example, sensor data in the data storage unit 13 comprised by the electronic tag 11 in response to the reception of the aforementioned command.

Then, comparison data, for example a threshold value, is sent from the R/W 12 to the electronic tag 11, so that the electronic tag 11 determines whether or not to participate in an anti-collision process by using the comparison data and, for example, a judgment condition sent simultaneously, and the tag transmits the unique identifier UID of the tag per se if the electronic tag is to participate.

Next, in the electronic tag system corresponding to a first preferred embodiment of the present invention, an electronic tag comprises a threshold value judgment unit for comparing between transmission-use data converted into digital data and a threshold value and for judging whether or not a threshold value judgment condition is satisfied; a data storage unit for storing the transmission-use data if the judgment condition is satisfied; and a tag-identifier transmission unit for transmitting the identifier of the tag per se in order to participate in an anti-collision process carried out between the electronic tag and the R/W as a necessary process prior to transmitting data to the R/W if the judgment condition is satisfied.

Corresponding to the above described configuration, the R/W is equipped with a data-obtainment request transmission unit similar to the configuration shown in Fig. 3. Then, a data-obtainment request, e.g., a sensor reference command, is transmitted from the R/W to the electronic tag, prompting it to judge whether or not the transmission-use data, e.g. , sensor data, satisfies a threshold value judgment condition in response to the reception of the command and writes the data to, for example, nonvolatile memory and also transmits the unique identifier UID to the R/W in order to participate in the anti-collision process if the transmission-use data satisfies the threshold value.

Furthermore, in the electronic tag system corresponding to a second preferred embodiment of the present invention, an electronic tag comprises a threshold value judgment unit and a data storage unit, which are similar to the first embodiment, and further comprises a tag identifier transmission-necessity judgment unit for determining whether or not the identifier of the tag per se is to be transmitted in order to participate in an anti-collision process as necessary prior to transmitting data, as in the above description, in accordance with a condition sent from the R/W after the data is stored.

The R/W is equipped with a data-obtainment request transmission unit similar to the above described configuration and additionally equipped with a judgment-request transmission unit for sending the condition data necessary for the electronic tag to determine the presence or absence of a need to participate in the above described anti-collision process so that the electronic tag judges a threshold value at the time of receiving, for example, a sensor reference command in the same manner as the above description and, if the judgment condition is satisfied, writes the transmission data to the memory; thereafter followed by determining the need or not of participating in the anti-collision process at the same time as receiving the above described condition data as, for example, a group_select command and transmitting the unique identifier UID to the R/W if participating in the anti-collision process.

Such is the description of the outline of the present invention. The following is the description of the preferred embodiments of the present invention in detail, described by using the drawings of the system configuration, tag configuration, and a sensor data collection process sequence.

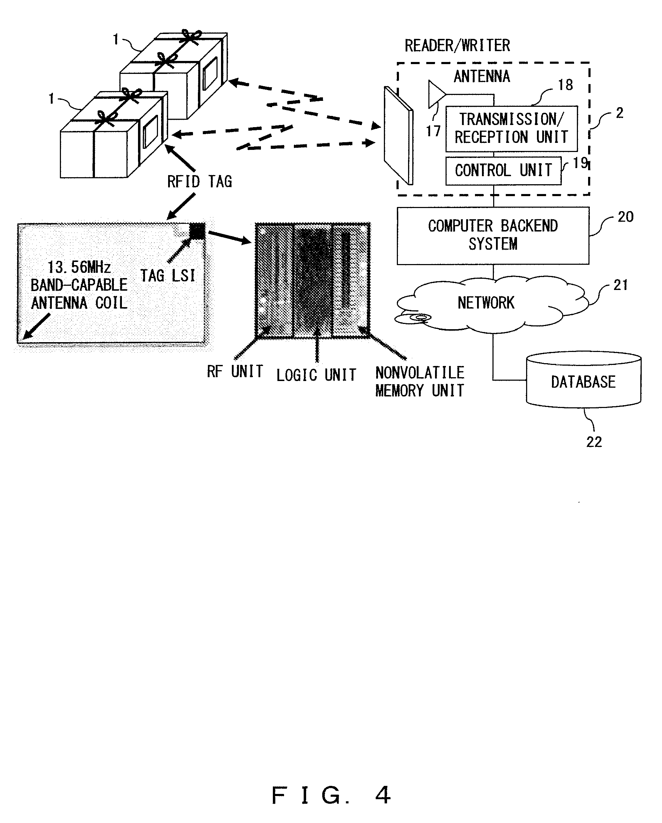

Fig. 4 is the overall configuration diagram of an RFID tag system according to the present embodiment. Referring to Fig. 4, a command and data are exchanged between a plurality of RFID tags 1 and the R/W 2. The RFID tags 1 are for performing communications with the R/W 2 by using, for example, a 13.56MHz carrier frequency, and the tags comprise a 13.56MHz -capable antenna coil and a tag LSI (i.e., a large scale integration). Further, as in Fig. 1, the tag LSI comprises an RF unit, a logic unit equivalent to the tag LSI control logic circuit 7 and nonvolatile memory equivalent to the memory 9.

The R/W 2, comprising an antenna 17, a transmission/reception unit 18 and a control unit 19, is connected to a computer or a backend system 20 as a host system, with, for example, the computer 20 being connected to a database 22 by way of a network 21.

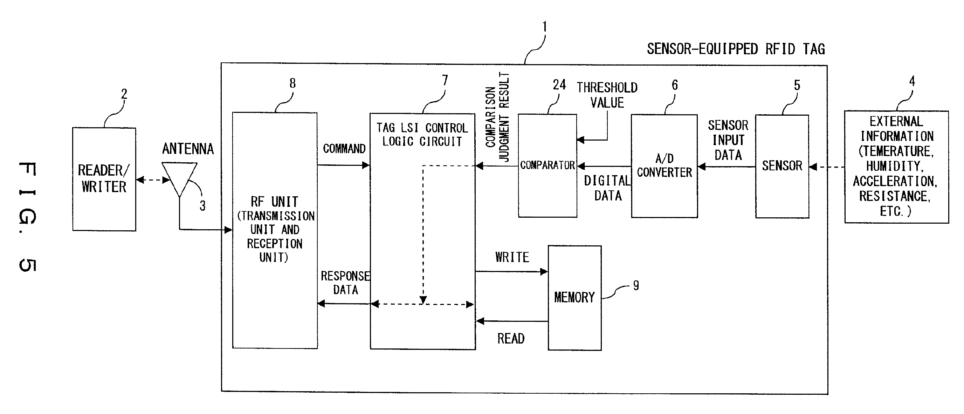

Fig. 5 is the block diagram of the configuration of a sensor-equipped RFID tag according to a first preferred embodiment of the present invention. Comparing the configuration shown in Fig. 5 with the conventional example of Fig. 1, the former is additionally equipped with a comparator 24 for comparing sensor data converted into digital data with a threshold value; otherwise the former is the same as the latter. That is, the present embodiment fundamentally differs in where it is possible to read and write, to and from the memory 9, sensor data as the output of the comparator 24, that is, the response data to the R/W 2. Incidentally, it shall be apparent that the threshold value, being stored in, for example, the specific address of the memory 9, is read and given to the comparator 24.

Note that although the sensor 5 and A/D converter 6 are comprised within the RFID tag in Fig. 5, they are, however, not required to be incorporated in the same LSI. It is of course possible to incorporate the sensor 5 and A/D converter 6 in, for example, a different LSI from that of the RFID tag. Further, there are two types of RFID tags, i.e., an active RFID tag incorporating a battery therein and a passive RFID tag incorporating no battery therein and instead driven by converting the power of the RF signal sent from the R/W into a direct current (DC) power. The present invention is applicable to both the active tag and passive tag.

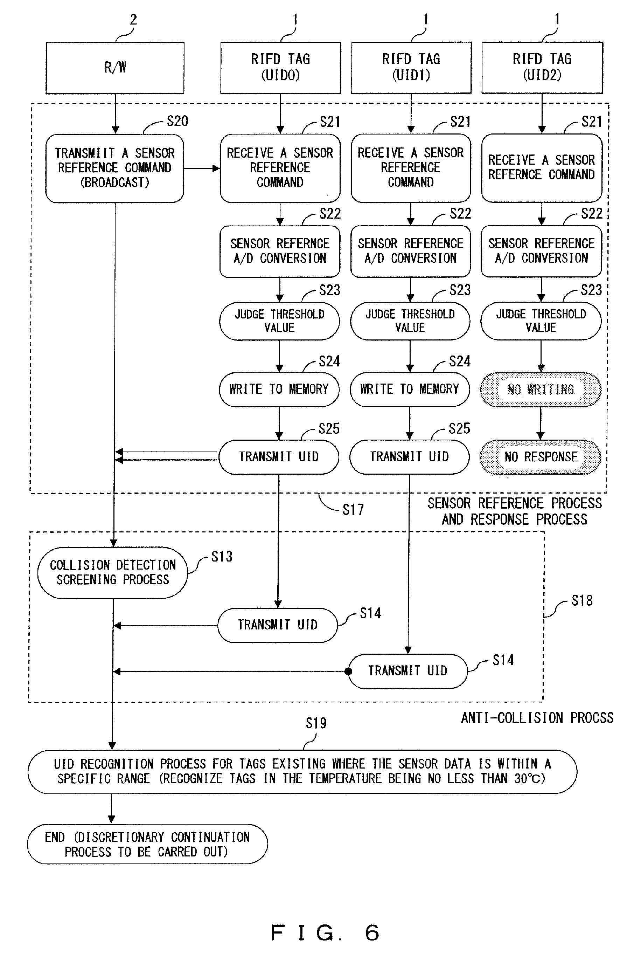

Fig. 6 is the process sequence for collecting sensor data from a tag according to the first embodiment. In the sequence of Fig. 6, a sensor reference process and response process are carried out in step S17 (also noted simply as "S17" hereinafter), an anti-collision process is carried out in S18, and a UID recognition process for tag(s), in which the sensor data is within a specific range, is carried out in S19.

In the sensor reference process and response process of S17, first a sensor reference command from the R/W (R/W) 2 is transmitted to, for example, all RFID tags 1 within the communication range as a broadcast command.

At the RFID tags 1, each of the RFID tags 1 possessing the respective unique UIDs, e.g., UID0, UID1, UID2 and so on, receives the sensor reference command in S21, refers to each respective sensor, A/D-converts the sensor data in S22, compares them with the threshold value in S23, writes the data to the memory in S24 if the sensor data satisfies the judgment condition (such as that the data is larger or smaller than the threshold value), and transmits the unique identifier UID of each respective tag per se to the R/W 2 in S25. If the judgment condition is not satisfied as a result of judging the threshold value in S23, the RFID tag 1 possessing, for example, UID2 does not perform the memory writing in S24 or the UID transmission in S25, and instead ends the substantial process in S23.

In the anti-collision process carried out in the subsequent S18, collision detection and a screening process are carried out if the UIDs are transmitted from a plurality of RFID tags 1 in S25. This process is similar to the process according to the conventional example described for Fig. 2, and therefore the description is not provided here. Then, a recognition process for the UIDs of the RFID tags, in which the respective pieces of sensor data are within a specific range, is carried out in S19. That is, what are recognized are tags in which the respective pieces of sensor data are within a specific range, e.g., the sensor data of the temperature having a value no less than 30°C is written to the memory in the case of, for example, a temperature sensor that is the result of the threshold value judgment carried out in S23.

Note that the configuration described here ends the sensor data collection process when the UID recognition process for RFID tags is completed; it is of course possible to send, thereafter, a common command for reading from R/W 2 the content of the memory of the RFID tags 1 that have transmitted the respective UIDs in a similar manner as the conventional example of Fig. 2, and then the individual RFID tags 1 transmit the data stored in the memory to the R/W 2.

As described above, the present embodiment is configured to compare the sensor data with the threshold value stored in, for example, the specific address of the memory and also to write the data to the memory if the judgment condition is satisfied. It is also configured so that only the RFID tags 1 which have written the respective pieces of sensor data to the memory participate in the anti-collision process by those RFID tags 1 sending the respective UIDs.

For example, if the sensor data is temperature data and if the memory is written in the case of the temperature being no less than 30°C, a conversion of such sensor data into digital data easily comparable with the threshold value when the sensor data is converted into digital data makes the judgment process easy. In an example case of converting the temperature data between -40°C and 87.5°C into 8-bit digital data, setting, for example, a quantization step to 0.5°C expresses the temperature data of 30°C as hexadecimal data "8C". The use of the hexadecimal data "8C" as a threshold value causes only the sensor-equipped RFID tags detecting the temperatures with values no less than 30°C to participate in the anti-collision process. Further, in order to detect the existence of the sensor-equipped RFID tags detecting, for example, the temperatures being no less than 35°C, the use of hexadecimal data "96" as the threshold value enables a threshold value judgment.

As such, in the first embodiment since only the RFID tags storing temperature data with a value no less than 30°C designated as the threshold value in the memory is returned, it possible to screen only the RFID tags with values no less than 30°C as the target and also possible to obtain at a high speed the UIDs of the RFID tags respectively storing the sensor data indicating no less than 30°C which the R/W desires to know. This high speed process capability is obtained by making a RFID tag that obtains the sensor data with a value less than 30°C not participate in the RFID tag anti-collision process. At the R/W, it is possible to know how many RFID tags storing the respective pieces of sensor data with a value no less than 30°C there are in the memory, or it is possible to know in which positions the RFID tags with data values no less than 30°C exist, as a result of the process in S19, and thereby the data can be reflected to, for example, controlling an air conditioner. As described above, the process sequence shown in Fig. 6 basically aims at picking up RFID tags existing in a certain condition from among all the RFID tags in high speed, and the process ends with the recognition of the UIDs.

Note that the memory 9 shown in Fig. 5 corresponds to a data storage unit and the process of S23 shown in Fig. 6 corresponds to a threshold judgment unit and the process of S25 corresponds to a tag-identifier transmission unit, all of which are noted in claim 2 of the present invention. Further, the process of S20 shown in Fig. 6 corresponds to a data-obtainment request transmission unit noted in the claim 8.

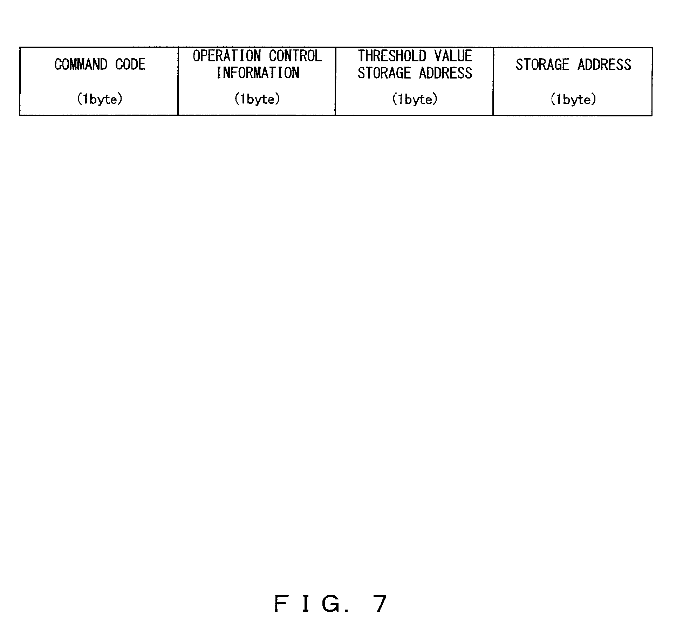

Fig. 7 exemplifies the format of a sensor reference command sent from the R/W 2 in step S20 shown in Fig. 6. Referring to Fig. 7, the command at the head is 1-byte data for distinguishing the command from other commands. Next, the operation control information is for determining the content of an operation, such as

whether memory is written to, if either larger or smaller than the result of comparing with a threshold value, by using, for example, the value of each bit within one-byte, whether the memory is written in accordance with the judgment result as shown in Fig. 6 or is written unconditionally, whether a control of inhibiting a rewriting against the written data of the memory is to be carried out or not, and whether or not the value of the UID is immediately transmitted on the basis of, for example, the threshold value judgment result.

The next one-byte is a threshold value storage address which is used for a threshold value judgment by reading the threshold value stored in the aforementioned address of the memory 9 in Fig. 5. The last one-byte is a memory address to store the sensor data which is stored in a designated address therein.

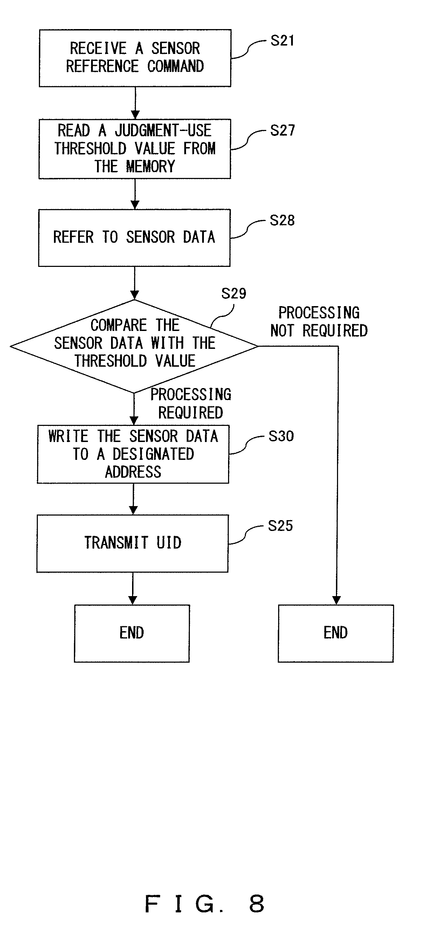

Fig. 8 is the sequence of the sensor reference and response process in detail at an RFID tag according to the first embodiment. This sequence shows the process in detail between steps S21 and S25 carried out at the RFID tag in Fig. 6.

First, a sensor reference command from the R/W is received in S21, a threshold value used for a threshold value judgment is read from, for example, the address designated by the command of Fig. 7 within the memory in S27, sensor data is referred to in S28, and the sensor data is compared with the threshold value in S29. This judgment is made corresponding to the operation control information of the command shown in Fig. 7, and, if a further process is not required, the process ends as is. If a process such as storing the sensor data in the memory is required, the sensor data is written to the address designated by the command of Fig. 7 in S30, the UID of the tag per se is transmitted over to the R/W in S25, and then the process ends.

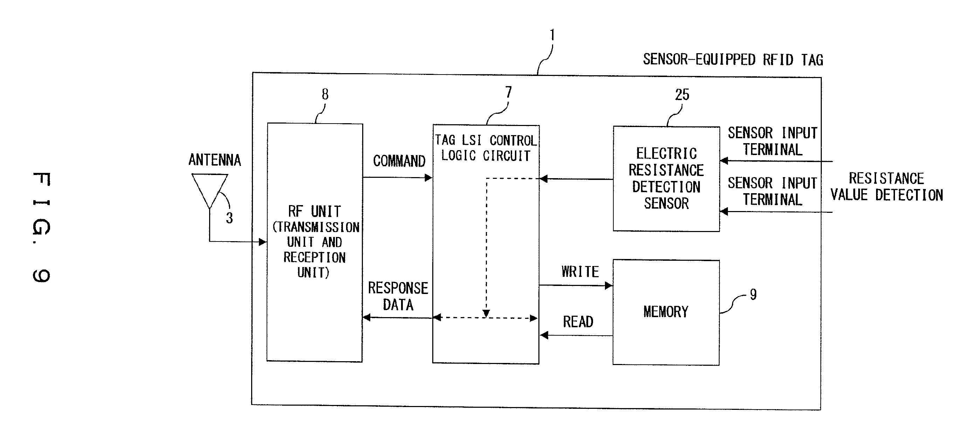

Fig. 9 is the configuration block diagram of an RFID tag equipped with a different sensor from that of Fig. 5. In the configuration of Fig. 5, the sensor 5 employs sensors respectively corresponding to various kinds of data such as temperature, humidity, acceleration, and resistance as external information 4, whereas the configuration example shown in Fig. 9 instead comprises an electric resistance detection sensor 25.

The electric resistance detection sensor 25, being a sensor for detecting the electric resistance between sensor input terminals, is for sensing one-bit information to determine whether the input terminals are mutually short-circuited or open. Because the sensor input information is one-bit, the judgment of a threshold value is not required; therefore, the tag LSI control logic circuit 7, upon receiving a sensor reference command from the R/W, initiates the sensor 25, writes a detection flag to the memory 9, transmits the UID of the tag per se, and participates in an anti-collision process thereafter if the input terminals are mutually open. If the input terminals are mutually short-circuited, the tag LSI control logic circuit 7 does not write a memory detection flag to the memory 9, shifting the present tag to the state of no-response and additionally not participating in the anti-collision thereafter.

At the R/W, if a collision among the UID responses to the sensor reference command does not occur, it is possible to identify an RFID tag in which the sensor terminals are mutually open. If a collision among the UID responses occurs, performing the screening process in a similar manner as Fig. 6 makes it possible to identify a plurality of RFID tags in which two terminals are mutually open.

Next, while volatile memory, such as static random access memory (SRAM), can be used as, for example, the memory 9 shown in Fig. 5 depending on the application for the present embodiment, it is configured however to use, for example, ferroelectric random access memory (FRAM) as nonvolatile memory.

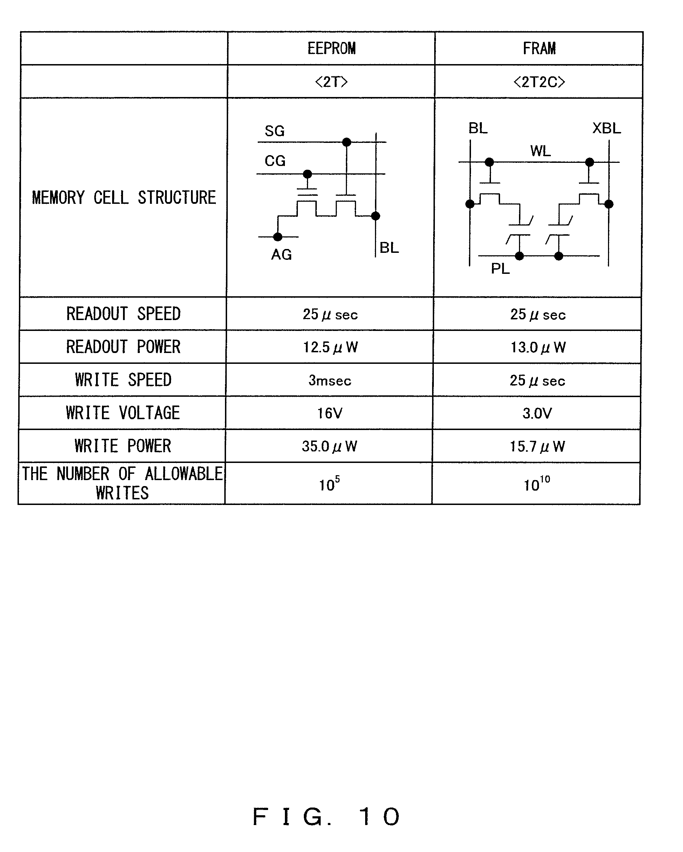

Fig. 10 shows the comparison of characteristics between the FRAM and the electrically erasable and programmable read-only memory (EEPROM) as nonvolatile memory. As compared to the FRAM, the EEPROM has a slow data-write speed, requiring at least 3 msec. In the above noted non-patent document 1, a 15-msec wait time is set at writing, based on the premise of using the EEPROM as nonvolatile memory. The use of FRAM makes it possible to carry out a data-write to the memory within 100µsec and up to 400µsec, which is required for the transmission of a command from the R/W and additionally for the response time of the sensor-equipped RFID tag to the command, thereby accomplishing a high-speed process.

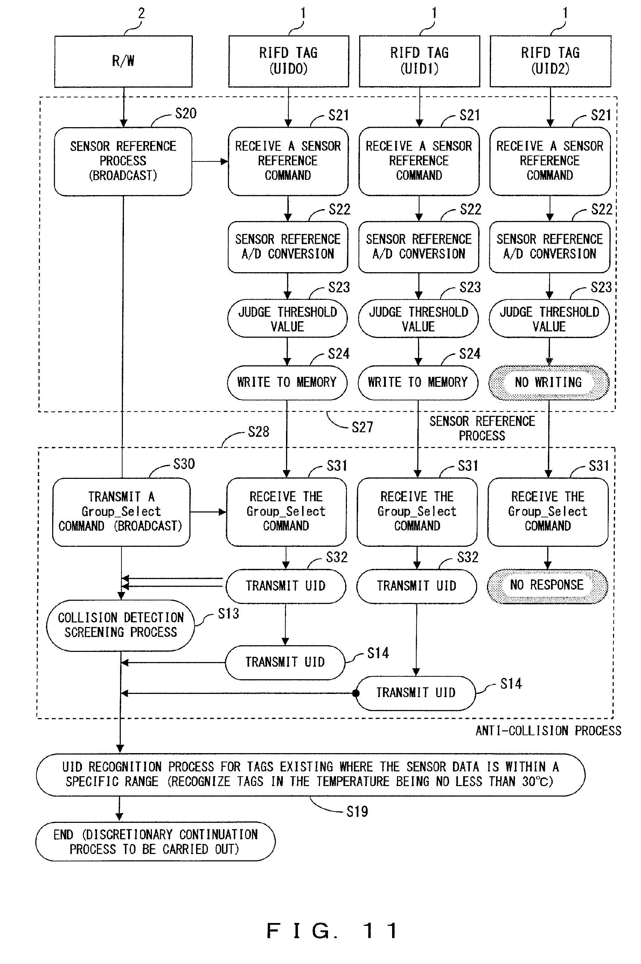

Fig. 11 is the process sequence for collecting sensor data from RFID tags according to the second embodiment. The second embodiment is configured to perform a threshold judgment for sensor data at each RFID tag in response to the sensor reference command received from the R/W as described above and to write the data to the memory if the judgment condition is satisfied. Then, a group_select command is transmitted from the R/W to each RFID tag. This command is to request only a tag(s) in which the data is written to the memory for sending the UID, so that a screening process as the anti-collision process is carried out in accordance with the transmission of the UID from the tag(s).

In the sensor reference process of S27 shown in Fig. 11, the processes of steps S21 through S24 are carried out at the respective RFID tags 1, in a similar manner as the first embodiment, in accordance with the transmission of a sensor reference command from the R/W in S20. Even an RFID tag 1 that has written the data to the memory, however, ends the sensor reference process without carrying out a UID transmission process of S25, different from the process shown in Fig. 6. Incidentally, those RFID tags 1, including the RFID tag 1 (in the case, a tag with UID2) which has written the data to the memory, do not carry out a response to the sensor reference command from the R/W; however, it of course may be possible to perform a certain response if there is such a need in terms of a protocol process.

In the anti-collision process of S28 shown in Fig. 11, the group_select command from the R/W 2 is sent as a broadcast command to all RFID tags 1 within the communication range in S30, and the command is received by the RFID tags 1 in S31. The group_select command is for requesting the RFID tag (s) 1 which have written the data to memory depending on whether or not the data is written to, for example, a specific address of the memory, causing the RFID tag (s) in which the data is written to the memory in S24, that is, the RFID tags 1 possessing the identifiers UID0 and UID1 in this example, to transmit the respective values of the UIDs to the R/W 2 in S32. An RFID tag in which data was not written to the memory, that is, the tag possessing the UID2, does not ever respond to the group_select command.

If the UID transmissions from a plurality of RFID tags 1 collide with one another, a screening process as an anti-collision process is carried out in steps S13 and S14 in a similar manner to the above description, and a recognition process for the UID of a tag(s), in which the sensor data is within a specific range, is carried out by the R/W 2 in S19 and then the process ends.

Incidentally, while the correlation of Figs. 5 and 11 with data storage unit, threshold judgment unit and data-obtainment request transmission unit noted in the claims 3 and 9 of the present invention is the same as that in the first embodiment, the process of S30 shown in Fig. 11 is equivalent to a judgment-request transmission unit and the process of S32 is equivalent to a tag identifier transmission-necessity judgment unit.

The configuration of the sensor-equipped RFID tag in the second embodiment is the same as that shown in Fig. 5, except that it may be equipped with a plurality of sensors, not necessarily one piece thereof. In this case, it is also possible to read threshold data corresponding to the respective pieces of sensor data from the different addresses of the memory 9, to compare the threshold data with the respectively corresponding pieces of sensor data, and to store the data in the different addresses corresponding to the comparison result. Alternatively, it may also be configured to send a plurality of commands as sensor reference commands in a time series and configured to designate memory storage addresses to the respective commands as shown in Fig. 7, and thereby the temporal change in the sensor data can be recorded in the memory. It is further possible to write temporal information, in addition to the sensor data, simultaneously to the memory as operation control information.

Further in Fig. 11, alternatively, even if the individual RFID tag 1 respectively compares the data of the temperature sensor with a threshold value, the threshold value may be a value unique to the respective tags in lieu of being common to all tags. That is, a unique threshold value for each tag is stored in the specific address of the memory 9 shown in Fig. 5 so that a threshold judgment can be carried out by the comparator 24 by using the threshold value. The value of the unique threshold is set for the purpose of, for example, correcting the variation of the sensor, and the value is set at the factory shipping testing of the LSI.

Note that, if the respective pieces of sensor data sent from a plurality of sensors are stored in the respectively corresponding addresses within the memory as described above, the designation of a storage address within the memory of the sensor data as a target, in, for example, a group_select command possessing a format similar to Fig. 7, enables only the RFID tag(s) 1 in which the data is written to the memory address to transmit the UID and thereby enables the R/W 2 to collect the sensor data of a specific sensor.

Lastly, a description is provided for a third preferred embodiment.

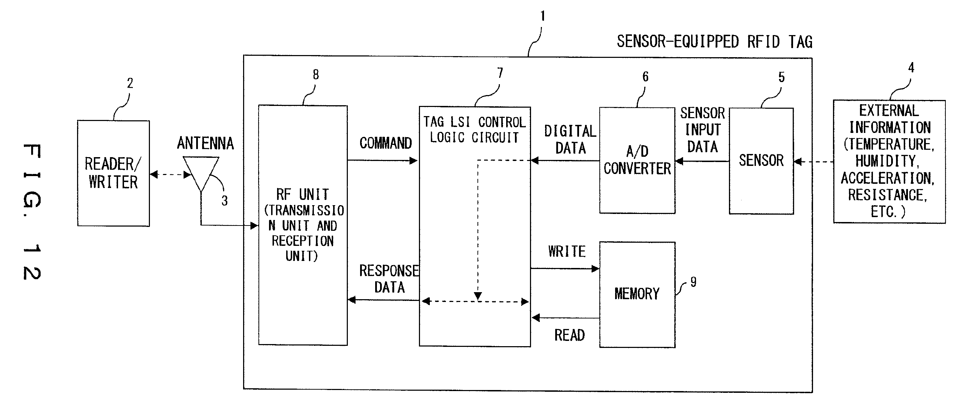

Fig. 12 is a block diagram of the configuration of a sensor-equipped RFID tag according to the third embodiment. Comparing Fig. 12 with Fig. 5, that is, the first embodiment, the comparator 24 for comparing the digital data as the output of the A/D converter 6 does not exist, and therefore the former is similar to the conventional example shown in Fig. 1. An exception to this similarity is that, in the conventional example of Fig. 1 as well as in the configuration of Fig. 5, the sensor data as response data to the R/W 2 can be written and read to and from the memory 9.

That is, the third embodiment is configured to perform the process of transmitting, as a group_select command, a command including a threshold value after the data is written to the memory at each tag in response to the reception of a sensor reference command, of comparing the data stored in the memory with the threshold value, and of transmitting the UID(s) of the tag(s) from only the tag(s) in which the data satisfying the threshold value judgment condition is written to the memory.

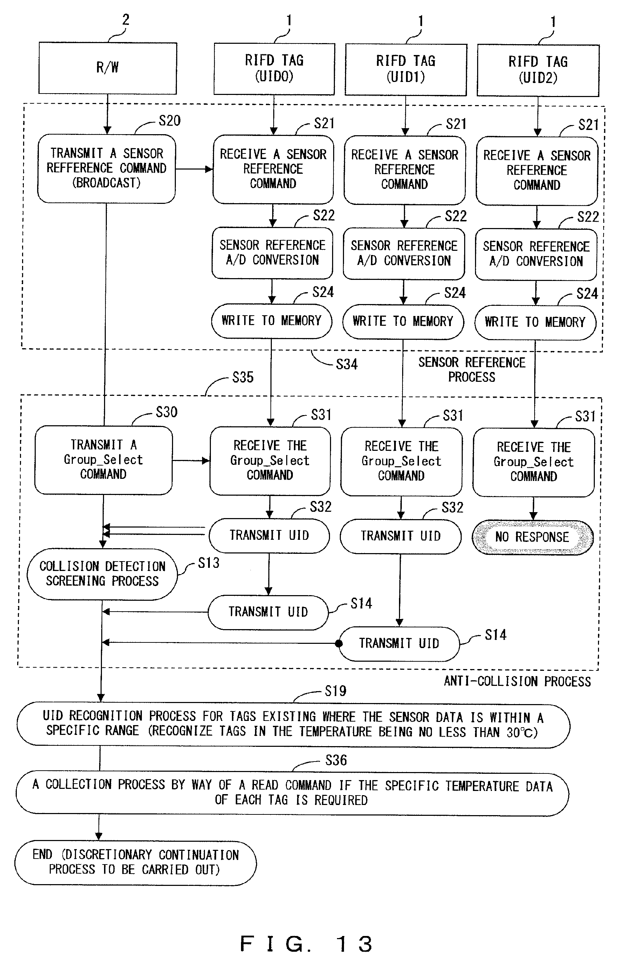

In the sensor reference process of S34 shown in Fig. 13, a sensor reference command is transmitted as a broadcast command from the R/W 2 in S20 so that each RFID tag 1 carries out the individual processes of receiving the command in S21, referring to the sensor, converting the sensor data into digital data in S22, and writing the data to the memory in S24.

In the anti-collision process carried out in the subsequent S35, a group_select command is sent as a broadcast command from the R/W 2 to all RFID tags 1 within the communication range in S30, so that the each of the RFID tags 1 receive the command in S31 and only the RFID tags (s) 1 in which the threshold value written to the memory designated by the command, e.g., the temperature data, for example, no less than 30°C, transmits the UID of the tag(s) per se to the R/W 2 in S32. The tag in which the temperature data written to the memory is less than 30°C, that is, the tag 1 possessing the identifier UID2 in this example, will never respond to the group_select command. Here, the group_select command has a format similar to Fig. 7, and the threshold value per se, instead of the threshold value storage address, is stored and transmitted from the R/W 2.

If there are plural RFID tags 1 which have transmitted the respective UIDs in S32, a screening process as the anti-collision process is carried out in steps S13 and S14; a recognition process for the UID(s) of a tag(s), in which the sensor data is within a specific range, is carried out by the R/W 2 in S19, followed by a data collection process being carried out by using a read command in S36 if specific temperature data of individual tag is required; and the process ends.

Note that the correlation between both Figs. 12 and 13 and both the data storage unit and the data-obtainment request transmission unit which are noted in the claims 1 and 7 of the present invention are the same as in the first and second embodiments; the process of S30 of Fig. 13, however, is equivalent to a comparison data transmission unit, and the process of S32 is equivalent to a tag identifier transmission-necessity judgment unit.

As described above, the present invention is contrived such that, for example, each RFID tag compares sensor data with a threshold value and writes the sensor data to memory if a threshold value judgment condition is satisfied, and such that only the RFID tags which have written the respective pieces of data to the memory send the respective UIDs of the tags to the R/W, thereby enabling the R/W to know the UIDs of the RFID tags in which the respective pieces of data satisfying the judgment condition are stored in the memory. Further, the use of the FRAM as memory for storing the data makes it possible to speed up the process. For example, if only ten pieces of tags, among 200 pieces thereof, obtain the sensor data indicating temperatures being no less than 30°C, the number of tags participating in an anti-collision process is reduced, thus reducing the process time to 5 seconds or less as compared to the total of 100 seconds for processing 200 pieces of tags at 0.5 seconds or less per tag.

## Claims

1. An electronic tag for transmitting and receiving data to and from an R/W, comprising:
a data storage unit for storing transmission-use data converted into digital data; and
a tag identifier transmission-necessity judgment unit for comparing between comparison data transmitted from an R/W and data stored in the data storage unit and determining whether or not the identifier of the tag per se is to be transmitted to the R/W in order to participate in an anti-collision process carried out between the electronic tag and R/W as a necessary process prior to transmitting data to the R/W.

2. An electronic tag for transmitting and receiving data to and from an R/W, comprising:
a threshold value judgment unit for comparing between transmission-use data converted into digital data and a threshold value corresponding to the transmission-use data and for judging whether or not a threshold value judgment condition is satisfied;
a data storage unit for storing the transmission-use data if the threshold value judgment condition is satisfied; and
a tag-identifier transmission unit for transmitting the identifier of the tag per se in order to participate in an anti-collision process carried out between the electronic tag and R/W as a necessary process prior to transmitting data to the R/W if the threshold value judgment condition has been satisfied.

3. An electronic tag for transmitting and receiving data to and from an R/W, comprising:
a threshold value judgment unit for comparing between transmission-use data converted into digital data and a threshold value corresponding to the transmission-use data and for judging whether or not the threshold value judgment condition has been satisfied;
a data storage unit for storing the transmission-use data if the threshold value judgment condition has been satisfied; and
a tag identifier transmission-necessity judgment unit for determining whether or not the identifier of the tag per se is to be transmitted in order for the unit to participate in an anti-collision process carried out between the electronic tag and R/W as a necessary process prior to transmitting data to the R/W in accordance with condition data sent from the R/W after storing the transmission-use data.

4. The electronic tag according to claim 1, 2 or 3, wherein
said data storage unit is constituted by nonvolatile memory.

5. The electronic tag according to claim 1, 2 or 3, wherein
said data storage unit is constituted by ferroelectric memory.

6. The electronic tag according to claim 1, 2 or 3, equipped with
a plurality of sensors, wherein
respective pieces of sensor data from the individual sensors are stored in different addresses within the data storage unit.

7. An electronic tag system comprising the electronic tag noted in claim 1 and an R/W for reading and writing data to and from the electronic tag, wherein:
the R/W comprises
a data-obtainment request transmission unit for sending a command requesting an electronic tag for obtaining data, and
a comparison data transmission unit for sending, to the electronic tag, comparison data to be compared with data stored in the data storage unit at the electronic tag, wherein
the data storage unit comprised in the electronic tag stores transmission-use data at the time of receiving the data-obtainment request command.

8. An electronic tag system comprising the electronic tag according to claim 2 and an R/W for reading and writing data to and from the electronic tag, wherein:
the R/W comprises
a data-obtainment request transmission unit for sending a command requesting an electronic tag for obtaining data, wherein
a threshold value judgment unit comprised in the electronic tag judges, at the time of receiving the data-obtainment request command, whether or not the threshold value judgment condition is satisfied.

9. An electronic tag system comprising the electronic tag according to claim 3 and an R/W for reading and writing data to and from the electronic tag, wherein:
the R/W comprises
a data-obtainment request transmission unit for sending a command requesting an electronic tag for obtaining data, and
a judgment request transmission unit for sending the condition data for the tag identifier transmission-necessity judgment unit comprised in the electronic tag to determine the presence or absence of the need to transmit a tag identifier, wherein
the threshold value judgment unit comprised in the electronic tag judges the threshold value judgment condition when the unit receives the data-obtainment request command.

10. The electronic tag system according to claim 7, 8 or 9, wherein
a data-obtainment request command sent from said R/W to an electronic tag further contains time information, which is to be stored in said data storage unit together with transmission-use data, and/or instructions prohibiting rewriting the storage content of the data storage unit.
